# EUROPEAN PATENT APPLICATION

(11) **EP 2 805 778 A1**
(43) Date of publication of application: **26.11.2014**
(21) Application number: 14168738.4
(22) Date of filing: 16.05.2014
(51) Int. Cl.: B05D 3/06, B05D 1/42, B05D 5/06

(54) **Apparatus to cure the paint covering of prevailing flat surfaces by means of UV radiation in an inert environment**

(30) Priority: 20.05.2013 IT BO20130231
(71) Applicant: Sorbini Service S.r.l., 61122 Pesaro (IT)
(72) Inventor: Sorbini, Roberto, 61100 Pesaro (IT); Filippini, Fabrizio, 61100 Pesaro (IT)
(74) Representative: Porsia, Attilio

(57) **Abstract**

The invention solves the technical problem of removing any air present in the layer of paint (V) to be polymerized and of closing this paint in communication with the outside environment. This problem is solved using a transparent belt (2) with properties such as to touch in an intimate and even manner both the painted surface (V) and the upper edges (B1, B2) of the panel (P), exerting on these edges a pressure that confines the same paint inside the perimeter of the panel, greatly limiting spillage thereof towards the outside. To achieve these objects, the transparent belt was produced with suitable properties of flexibility, softness, elasticity and compliance and the guide roller (202) of the same transparent belt (2), which first acts on the painted panels (P, V), is covered with a cylindrical layer (202') of an elastomeric material with suitable properties of elasticity and yield and providing the right degree of interference between this roller with the portion of transparent belt guided thereon and the upper and painted face of the panel passing through.

## Description

The invention refers to systems for the rapid drying of covering paints with UV polymerization, in panels made of wood or other material or in other items having a prevailing flat extension, of the type described in the patent applications WO 1990/15673 and WO 1999/61168, wherein sandwiched between the ultraviolet radiation source used to polymerize the layer of paint applied to the item passing through and the same layer of paint, there is positioned in contact with this latter, a belt made of a material transparent to the polymerizing radiation, thus improving and simplifying the process of catalyzing the paint as it prevents contact with the oxygen in the air. In particular, the invention refers to those systems in which said transparent belt, hereinafter always referred to with this term, is in the form of a closed loop belt, guided between two lower pressing rollers and at least one upper roller acting as tensioner. The prior art document WO 2004/065025 also provides for the possibility of removing from the layer of paint any trace of air that remains trapped between said transparent belt and the panel and of covering this layer of paint also on the perimeter with the same transparent belt, using a belt for supporting and feeding panels of porous nature and causing it to travel on a support surface, also porous, through which air is drawn so that the transparent belt is drawn downward and adheres intimately on the layer of paint that covers the panel passing through, covering it both on the top and on the perimeter, thereby producing a transparent chamber that covers both the layer of paint and the perimeter of the panel and which is completely devoid of air. This process is difficult to apply when treating panels with a thickness of over 10 mm, even using a transparent belt made of Mylar of very limited thickness.

When processing of panels with a thickness of over 10 mm, currently only the layer of paint is intimately covered with the transparent belt, but consequently a small part of the paint located on the perimeter of the painted panel frequently tends to spill over the edges and to remain attached to the outer surface of said transparent belt, where it solidifies and remains firmly attached, and the larger the quantity of paint applied to the panel is, the more evident this phenomenon becomes. Besides soiling the transparent belt, so that it becomes necessary to carry out efficient cleaning of the same belt along its return path, the sides of the layer of paint covering the panels have edges that are in part rough and sharp, presumably caused by the polymerized paint integral with the panel detaching from the paint that has spilled over the edges and is integral with the transparent belt, which must be removed.

The invention intends to solve these and other limits of the prior art, with the following idea of solution. The air is removed from the layer of paint to be polymerized by pressure, using a transparent belt with properties that allow it to lie in an intimate and evenly distributed manner on the painted surface and on the upper edges of the panel, exerting on these edges sufficient pressure to confine the same paint inside the perimeter of the same panel, greatly limiting spillage thereof towards the outside. These objects are achieved by producing a transparent belt with suitable properties of flexibility, softness, elasticity and compliance and by covering the guide roller of the same transparent belt that acts first on the painted panels with a cylindrical layer of a suitable elastomeric material with suitable properties of elasticity and compliance and by providing the right degree of interference between this roller with the portion of transparent belt guided thereon and the upper painted face of the panel passing through.

Further features of the invention and of the advantages deriving therefrom will be more apparent from the description below of a preferred embodiment thereof, illustrated purely by way of a non-limiting example in the figures of the attached drawing, wherein:
- Fig. 1 is a diagrammatic side elevation view of a machine for polymerization of UV paints in inert environment, improved according to the invention;
- Fig. 2 is a magnified side view according to Fig. 1, showing the guide roller of the transparent belt that is the first to be engaged by the painted panel inserted into the machine in question;
- Fig. 3 is a magnification of parts found along the section line III-III of Fig. 1.

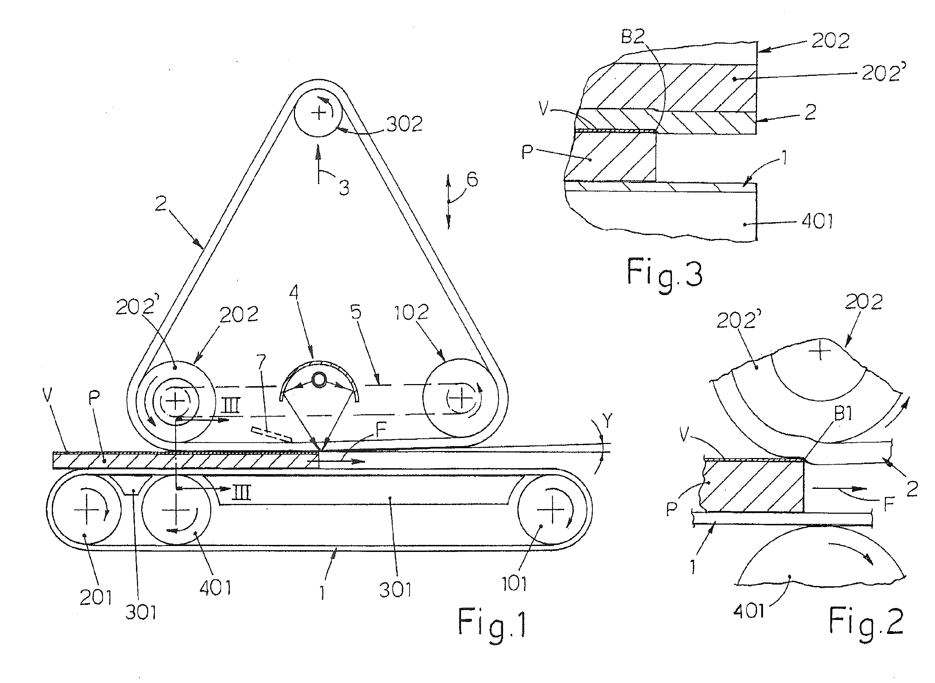

In Fig. 1, the reference number 1 denotates the belt conveyor guided on the rollers 101 and 201, on the upper branch of which there lie the panels painted P at least on the top with a UV paint V, of suitable density, which the same conveyor feeds in the direction of the arrow F, with a speed that is, for example, comprised between 10 and 40 m/min. The front roller 101 is motorized so that the upper branch of the conveyor 1 is tensioned and this branch runs on horizontal levelling guides 301. The reference number 2 indicates an endless transparent belt, positioned with its lower branch above the conveyor 1, guided on two lower rollers 102, 202 and on at least a third upper roller 302 with the function of tensioner, connected to pneumatic actuators that push it in the direction of the arrow 3 to maintain a suitable tension on the belt 2 at all times. The roller 102 is motorized and is connected kinematically with the roller 101 in any way such that the lower branch of the transparent belt 2 travels in the same direction F as the upper branch of the conveyor 1 and preferably at the same speed. The numeral 5 indicates a kinematic chain that mutually connects the lower rollers 102, 202 of the transparent belt 2, so as to maintain the tension of the lower branch of the same belt 2 constant while the paint polymerizes by passing under a UV polymerization source 4, positioned in the intermediate part of the lower branch of the transparent belt 2 and which through this belt irradiates the paint V of the panels passing through, to activate the catalyzing and hardening process of the same paint. All the components of the transparent belt 2 and the radiant source 4 are mounted on a structure, not shown, adjustable vertically and adaptable to the thickness of the panels P, as indicated schematically by the arrow 6.

According to the invention, the transparent belt 2 is made of transparent silicone resin, with a thickness comprised between 2 and 4 mm and with a hardness comprised between 30 and 50 SH. The belt 2 in question is suitable to be produced in its endless and looped form, with a moulding process, so as to have no joins that could create thereon a surface break that would lead to undesirable optical and mechanical effects.

The feed roller 202 of the transparent belt 2 is covered with a cylindrical layer 202' of elastomeric material, of suitable thickness, sufficiently elastic and compliant, having a hardness comprised between 15 and 25 SH, and opposite and parallel to the same roller 202 there is provided a counter and idle roller 401, under the upper branch of the conveyor 1. The system formed by the compliant roller 202 and by the transparent belt 2, is arranged to operate with suitable interference with respect to the thickness of the panel P to be treated, for example comprised between 1 and 2 mm, preferably around 1.5 mm.

The motorized roller 102 of the transparent belt 2 is instead positioned with its lower generatrix on an ideal plane spaced apart from the one containing the lower generatrix of the pressing roller 202 by a distance Y such as to determine progressive detachment of the transparent belt 2 from the polymerized paint V of the panel P (see below).

Finally, the numeral 7 indicates a doctor blade made of spring steel, which acts with the right interference above the lower and active branch of the transparent belt 2 and which is positioned parallel and upstream of the radiant source 5, so as not to limit the operating capacity thereof. According to the invention, the radiation emitted by the source 4 is preferably focused on a very narrow line in the direction of the length of the machine and is the same width as the maximum width of the panels that can be treated.

When the panel P with the paint reaches the point of cooperation with the rubber roller 202 covered by the silicone belt 2 and with the counter roller 401 over which the conveyor 1 is fitted, the assembly 202, 2 is elastically deformed, taking the silicone belt 2 to close the front edge B1 (Fig. 2) and the lateral edges B2 (Fig. 3) of the panel P, so as to confine the paint V inside the perimeter of the panel P, depriving it of any air present and greatly limiting the spillage thereof towards the outside and consequent soiling of the transparent belt 2 in the parts outside the panel P. Even when the panel passes beyond the feed rollers 202, 401, the transparent belt 2 tends to remain lying intimately on the paint, also due to the immediately subsequent action of the doctor blade 7 on the same panel, also as a result of its weight and of its elasticity and also as a result of the limited pull to which the same belt 2 is subjected between the two synchronized guide rollers 102, 202. Even after having passed beyond the doctor blade 7 and when passing under the radiant source 4, the transparent belt 2 feels the effect of the profiling that derives from the elastic deformation of the pressure unit upstream 202, 2, so that the lateral edges B2 of the panel P (Fig. 3) remain closed towards the outside. Also in the step of delivery of the rear side of the panel P from the pressure unit 202, 2, the rear edge of the layer of paint remains closed towards the outside and in optimal conditions for oxygen free polymerization.

Maximum polymerization of the paint V is implemented along the line of fire of the source 4, so that after passing the source 4, contact of the transparent belt 2 with the same polymerized paint can decrease gradually. For this reason, and also to ensure progressive and non-traumatic detachment of the transparent belt from the hardened paint V, the roller 102 downstream lies at a slightly greater height than the pressure roller 202, that is distance Y, so that the belt 2 is raised progressively and without friction from the hardened paint V, without causing any damage. With the solution described, the painted sides of the panels have no sharp edges and/or roughness, as instead occurs in the prior art. The small traces of paint that unavoidably remain on the transparent belt 2 will be removed with a suitable cleaning operation carried out on the return branch or branches of this belt 2.

It is understood that the description refers to a preferred embodiment of the invention, to which numerous variants and constructional changes can be made, referring, for example, to the use other means in place of the doctor blade 7, such as rollers, to be positioned upstream and/or downstream of the radiant source 4. These and all those modifications or technical equivalents that are apparent to those skilled in the art are included in the scope of the invention as described and illustrated, and as claimed below. In the claims, the references indicated in brackets are purely indicative and do not limit the scope of protection of these same claims.

## Claims

1. Apparatus for promoting the removal of air and for preventing contact with the outside of the layer of paint (V) with UV polymerization, deposited on panels (P) or other items having a prevailing flat extension which, by means of a conveyor (1) are made to pass under and in contact with a closed transparent belt (29 by means of which the paint (V) is confined in an airless environment and is irradiated by a UV polymerization source (4), this belt (2) being guided on a pair of lower rollers, parallel and motorized (102, 202) and on at least a third upper roller (302) acting as a tensioner, **characterized in that**:
- said belt (2) is made with a moulding process, so as to have no joins, with transparent silicone resin, with a thickness comprised between 2 and 4 mm with suitable properties of elasticity and softness;
- the lower drive roller (202) of said transparent belt (2), which is first engaged by the painted panel (P, V) is covered with a cylindrical layer of suitable thickness (202') made of an elastomeric material having suitable properties of elasticity and softness and **in that** the assembly formed by this roller (202, 202') and by the transparent belt (2) guided thereon is adjusted in distance from said conveyor (1) as a function of the thickness of the panels (P) to be treated and so as to exert a suitable pressure on the painted surface (V) of the panel (P) passing through, so that said transparent belt (2) lies in an intimate and evenly distributed manner on the painted surface and on the upper edges (B1, B2) of the panel (P), exerting on these edges a pressure that confines the paint inside the perimeter of the same panel, depriving it of any air present, limiting contact thereof with the outside and greatly limiting spillage thereof towards the outside.

2. Apparatus according to claim 1), wherein opposite and parallel to said pressing roller (202, 202') there is provided a counter roller (401) under the upper branch of the conveyor (1) for feeding the painted panels (P, V).

3. Apparatus according to claim 1), wherein said transparent belt made of silicone resin (2) has a hardness comprised between around 30 to 50 SH.

4. Apparatus according to claim 1), wherein the cylindrical and suitably thick layer of elastomeric material (202') that covers the roller (202) which first carries the transparent belt (2) into contact with the painted surface (V) of the panel (P) passing through, has a hardness comprised between around 15 and 25 SH.

5. Apparatus according to claim 1), wherein the system formed by the compliant roller (202, 202') and by the transparent belt (2), is arranged to operate with an interference with respect to the thickness of the painted panel (P, V) to be treated, for example comprised between 1 and 2 mm, preferably with an interference of around 1.5 mm.

6. Apparatus according to claim 1), wherein the motorized roller (102) of the transparent belt (2) that is last engaged by the panel (P, V) passing through and to be treated, is positioned with its lower generatrix on an ideal plane 2 spaced apart from the one containing the lower generatrix of the front pressing roller (202, 202') with a distance (Y) such as to determine progressive detachment of the transparent belt (2) from the polymerized paint (V) of the same panel (P).

7. Apparatus according to claim 1), **characterized by** the use of a radiant source (4) that emits a radiation focused on a very narrow line in the direction of the length of the panel passing through (P, V) and the same width as the maximum width of the panels that can be processed.

8. Apparatus according to claim 7), **characterized by** comprising at least one doctor blade made of spring steel (7) or another equivalent means, which acts with the right interference above the lower and active branch of the transparent belt 2 and which is positioned parallel and upstream of the radiant source 5, so as not to limit the operating capacity thereof.

9. Apparatus according to claim 1), wherein there is provided a kinematic chain (5) to mutually connect the lower rollers (102, 202) of the transparent belt (2), so as to maintain the tension of the lower branch of the same belt (2) constant while the paint polymerizes passing under said UV polymerization source (4).
